Europäisches Patentamt

European Patent Office

Office européen des brevets

(11) Numéro de publication: **0 301 947 B1**

(19)

(12) **FASCICULE DE BREVET EUROPEEN**

(45) Date de publication de fascicule du brevet: **31.03.93** (51) Int. Cl.⁵: **G01S 3/78**, G01S 3/784

(21) Numéro de dépôt: **88401909.2**

(22) Date de dépôt: **22.07.88**

(54) **Dispositif optoélectrique de détection et de localisation d'une source rayonnante.**

(30) Priorité: **31.07.87 FR 8710876**

(43) Date de publication de la demande:
**01.02.89 Bulletin 89/05**

(45) Mention de la délivrance du brevet:
**31.03.93 Bulletin 93/13**

(84) Etats contractants désignés:
**DE GB**

(56) Documents cités:
**EP-A- 0 015 199**
**EP-A- 0 155 858**
**FR-A- 2 322 356**
**FR-A- 2 399 033**
**US-A- 3 370 293**

(73) Titulaire: **THOMSON-CSF**
**51, Esplanade du Général de Gaulle**
**F-92800 Puteaux(FR)**

(72) Inventeur: **Marquet, Patrice**
**Thomson-CSF SCPI 19, avenue de Messine**
**F-75008 Paris(FR)**
Inventeur: **Dunouvion, Philippe**
**Thomson-CSF SCPI 19, avenue de Messine**
**F-75008 Paris(FR)**
Inventeur: **Lemaire, Jean-Marc**
**Thomson-CSF SCPI 19, avenue de Messine**
**F-75008 Paris(FR)**

(74) Mandataire: **Turlèque, Clotilde et al**
**THOMSON-CSF, SCPI, B.P. 329, 50, rue Jean-Pierre Timbaud**
**F-92402 Courbevoie Cédex (FR)**

## Description

La présente invention concerne un dispositif optoélectrique de détection et de localisation de source rayonnante. Comme on le verra la localisation peut se faire dans le cas le plus simple par rapport à un axe de référence, tel un axe de référence gisement ou site, ou en ayant à la fois les localisations angulaires en site et en gisement ce qui donne la direction de la source par rapport au dispositif, ou encore avec au moins deux localisations directionnelles sécantes on obtient finalement la localisation spatiale de la source rayonnante. Par source rayonnante on entend, soit une source éloignée, soit une source plus proche mais de faible dimension de manière à l'assimiler à une source ponctuelle.

Selon des techniques connues, notamment par le brevet français 2 399 033, il est réalisé un dispositif de localisation angulaire de source lumineuse ponctuelle comportant un cache optique à l'avant d'un boîtier dans le fond duquel sont disposés des réseaux linéaires d'éléments photosensibles dans un plan parallèle à celui du cache. Celui-ci est pourvu de zones transparentes sous forme de fentes linéaires pour délimiter le rayonnement provenant de la source selon au moins deux plans sécants dont la droite d'intersection passe par la source émettrice. Chaque fente est associée avec une barrette détectrice de direction inclinée par rapport à celle de la fente, de préférence perpendiculaire à la fente. Ainsi les points d'intersection des plans avec les barrettes détectrices permettent de déterminer par le calcul la position de la droite d'intersection des plans c'est-à-dire de localisation directionnelle de la source par rapport au dispositif. Des circuits de traitement des signaux détectés permettent d'identifier les rangs des éléments sensibilisés correspondant aux points d'intersections et des circuits de calculs annexes élaborent les données de dépointage de la source. Avec deux dispositifs on peut obtenir deux directions de localisation sécantes à l'endroit de la source et donc calculer la location spatiale de celle-ci.

Suivant l'une de ces techniques connues décrite dans le brevet US 4 092 072, le cache comporte deux fentes inclinées formant un V placé devant un réseau linéaire d'éléments photosensibles pour définir deux plans d'intersection et la localisation directionnelle de la source.

Face à l'utilisation de plus en plus fréquente des lasers dans les systèmes d'armes (télémètres, illuminateurs,..) il devient nécessaire de prévenir l'équipage d'un véhicule ou d'un aéronef en cas d'illumination de celui-ci. Des équipements correspondants appelés détecteurs d'alerte laser, n'ont pour but que de détecter la présence d'une menace, ceci dans un champ important autour du porteur, par exemple de 360° en gisement et 90° en site.

Les dispositifs de localisation précités ne sont généralement pas prévus pour fonctionner dans des champs aussi importants, par exemple ils sont destinés à être montés sur des systèmes viseurs de casque. En outre, ils ne présentent pas pour le problème de détection d'alerte laser une sensibilité suffisante.

Un objet de l'invention est de réaliser un dispositif de localisation angulaire de source lumineuse ponctuelle ou quasi-ponctuelle combinant également un cache optique avec une ou plusieurs barrettes photodétectrices et dans lequel ces éléments sont agencés de manière à remédier aux inconvénients précités tout en assurant la localisation précise de la source.

Selon l'invention il est réalisé un dispositif optoélectrique de détection et de localisation d'une source au moins un capteur élémentaire avec un réseau linéaire d'éléments photodétecteurs et, dans un plan parallèle au réseau, un cache optique, ce dernier comportant au moins une zone étroite délimitée de forme linéaire pour définir avec la source un plan sécant au réseau associé, un circuit de traitement des signaux détectés comportant, sur une même vole, un circuit de localisation de rang pour identifier le rang des éléments du réseau contenus dans le plan, et un circuit de calcul pour calculer, à partir des informations de rang, un paramètre de localisation angulaire de la direction de la source, le dispositif étant caractérisé en ce que le cache est totalement transparent en dehors desdites zones linéaires qui sont opaques et en ce que le circuit de traitement des signaux comporte, sur une deuxième voie, un sommateur des signaux détectés, couplé à un comparateur à seuil pour valider la détection de la source rayonnante par transmission d'un signal de validation aux circuits de localisation et de calcul.

Les caractéristiques et avantages de l'invention apparaîtront dans la description qui suit donnée à titre d'exemple, à l'aide des figures annexées qui représentent :

- Fig. 1, un schéma d'un dispositif de localisation conforme à l'invention ;
- Fig. 2, un bloc-diagramme relatif aux circuits électroniques du dispositif ;
- Figs. 3 et 4, des schémas simplifiés relatifs au champ couvert par le dispositif ;
- Fig. 5, une variante de montage du dispositif pour permettre la localisation directionnelle de la source par doublage du montage capteur élémentaire ;
- Fig. 6, un autre mode de réalisation d'un dispositif de détection et de localisation conforme à l'invention ;

- Fig. 7, un schéma relatif à la mesure du dépointage directionnel procuré par le dispositif selon la figure 6.

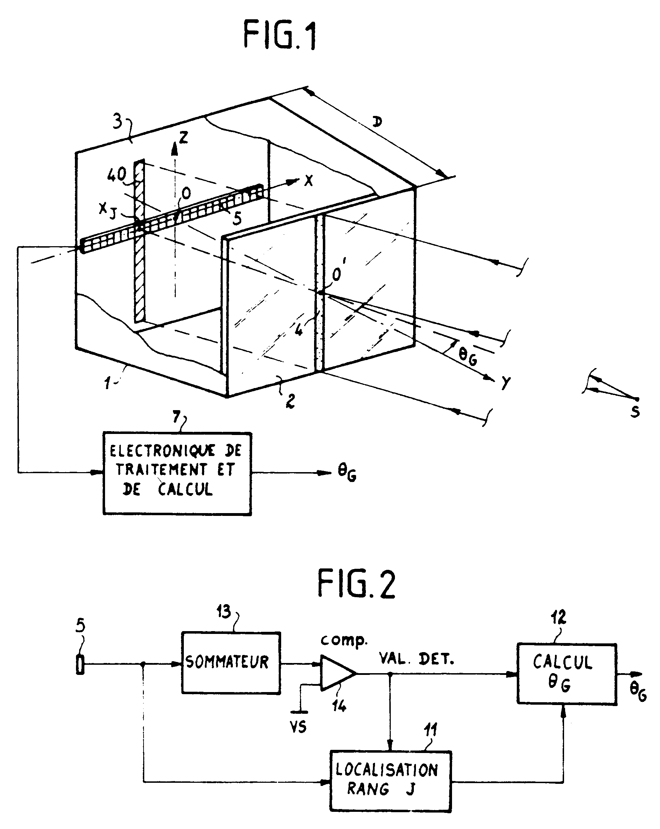

La figure 1 représente le mode plus simple de réalisation d'un dispositif selon l'invention mais qui ne permet cependant qu'une localisation angulaire, par exemple en gisement $\theta_G$ dans le cas représenté. Le dispositif de détection et de localisation comporte un boîtier 1 pour isoler les éléments détecteurs de rayonnement ambiant. Le boîtier comporte deux faces planes et parallèles 2 et 3, il peut être de forme parallèlépipédique comme représenté. La face avant 2 est un hublot transparent muni d'une zone opaque délimitée de forme linéaire 4 pour former un cache optique qui interrompt le passage d'un rayonnement incident à l'endroit de cette zone opaque 4. La face arrière 3 comporte du côté interne au boîtier la partie détectrice composée d'une unique barrette 5 d'éléments photodétecteurs. On appelle X la direction de la barrette, par exemple une direction horizontale, et Z la direction verticale au centre O de la barrette. Dans l'exemple figuré la zone linéaire opaque 4 est de direction Z; Le point O correspond à la projection du point $O'$ de la zone 4, la direction $OO'$ étant perpendiculaire au plan 3 et formant la troisième direction cartésienne de référence Y de mesure du gisement. La direction Y est la direction de dépointage nul par rapport à laquelle s'effectue la mesure de la localisation angulaire $\theta_G$ de la source rayonnante S. La barrette 5 peut être réalisée en circuit DTC (dispositif à transfert de charge) encore appelée circuit CCD (Charge coupled device).

Les circuits électroniques de traitement et de calcul ont été représentés par le bloc 7. Ces circuits peuvent être réalisés sous faible dimension en circuit solide et incorporé, au moins en partie, dans le boîtier à l'arrière de la face 3. Les circuits de calcul dans les cas plus complexes d'utilisation de plusieurs capteurs 1 pour assurer une localisation directionnelle ou spatiale, pourront être situés à distance et faire partie d'un calculateur annexe. La sélection du rayonnement utile c'est-à-dire provenant de la source S à localiser est obtenue de manière connue avec des barrette photosensibles dans les spectres de radiations correpondant aux sources à détecter. Le domaine spectral d'exploitation peut, dans le cas de détection d'illuminateur, se situer dans l'infrarouge proche ou lointain. Il n'est pas exclu d'utiliser en complément un filtrage optique sur le trajet des rayons transmis. Ce filtrage optique peut être réalisé par dépôt sur le hublot 2.

Le fonctionnement est apparent sur la figure 1 et l'on considère une source ponctuelle S à distance dont le rayonnement parvient sous forme d'un faisceau parallèle au niveau du capteur 1. La zone opaque linéaire 4 projette une ombre 40 sur le fond du boîtier, le restant du plan 3 étant éclairé par le rayonnement de la source à travers les zones transparentes du hublot. Cette ombre 40 intercepte la barrette 5 en un point d'abscisse $X_J$ qui donne la position angulaire en gisement selon la relation $X_J = X_o + D.tg\theta G$, où Xo représente l'abscisse au point O milieu de la barrette, $\theta G$ est l'angle de dépointage en gisement de la source S, et D représente la distance $OO'$.

On se rend compte que la position selon la direction Z représentée pour la zone linéaire 4 ne doit pas être considérée comme limitative, la condition étant que l'ombre portée intercepte avec la barrette et donc la zone 4 ne soit pas parallèle à la barrette mais inclinée par rapport à celle-ci. La position respective à 90° de la direction des éléments 4 et 5 est cependant préférentielle.

La figure 2 montre un diagramme simplifié de réalisation possible des circuits électroniques. Les signaux détectés sont appliqués à un circuit de localisation de rang 11 qui peut être conçu selon des techniques dérivées de celles décrites dans le brevet FR A-2.399.033 déjà cité. L'information de rang devient ici celle du rang du ou des éléments non irradiés par la source qui peuvent être déterminés par un niveau de signal détecté inférieur à un seuil donné ; cette information de rang est transmise ensuite vers des circuits de calcul 12 pour calculer l'information $\theta G$ de dépointage en gisement qui est déduite de la formule simple précitée. Les circuits électroniques peuvent comporter en outre, comme indiqué, une deuxième voie à l'entrée avec un sommateur 13 des n signaux détectés par les n éléments composant la barrette 5, cette somme étant transmise à un circuit comparateur à seuil 14 pour valider la détection de la source S. Le signal de validation est transmis aux circuits de localisation 11 et de calcul 12 pour autoriser les opérations de traitement et de calcul. On se rend bien compte que à l'exception d'un ou de quelques éléments irradiés situés à l'intersection de l'ombre 40 avec la barrette 5, tous les autres éléments de la barrette fournissent un signal détecté ce qui donne une grande sensibilité au dispositif.

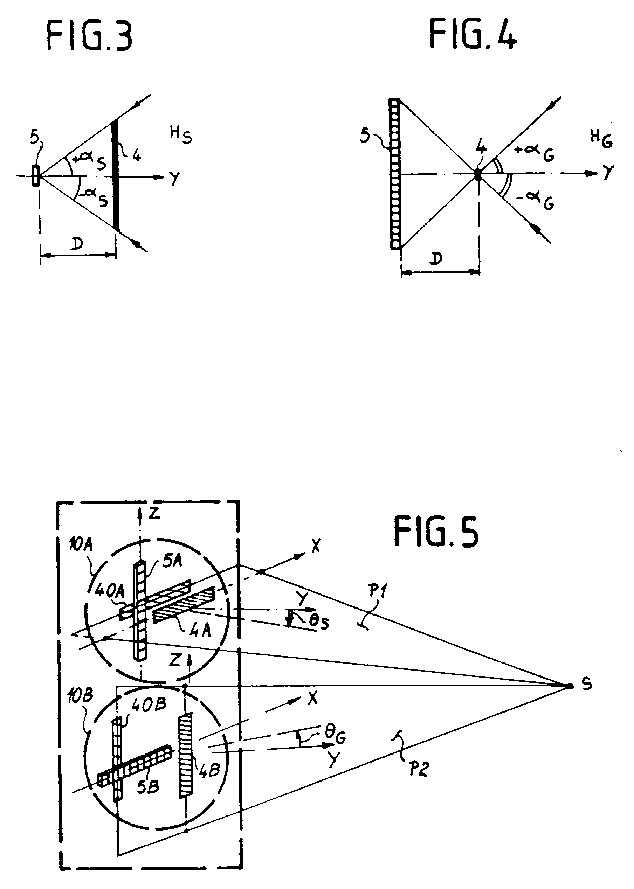

Les figures 3 et 4 représentent respectivement les champs en site HS et en gisement HG du montage. Avec une distance D faible on obtient des valeurs importantes pour ces champs par exemple de ±45° en site et autant en gisement. Pour assurer une couverture totale en gisement sur 360° il suffit de grouper plusieurs montages, par exemple quatre montages couvrant chacun 90°. La résolution qui est liée au nombre n d'éléments détecteurs peut atteindre aisément quelques degrés. Ces différentes caractéristiques permettent d'envisager avantageusement l'application du dispositif à la détection et à la localisation d'illuminateurs laser.

Le nombre élevé de détecteurs éclairés voisins du nombre total n correspond à une augmentation sensible de la surface de détection et donc du rapport signal/bruit. On réduit ainsi considérablement les fausses alarmes du fait de cette détection simultanée sur le n-p éléments éclairés, p étant égal au nombre d'éléments dans l'ombre 40. Avec une zone opaque 4 fine on obtient une ombre portée 40 qui correspond avoir sensiblement à la dimension d'un élément détecteur (dans ce cas p = 1). La zone opaque 4 est déposée de préférence sur la face arrière du hublot 2. Dans cet exemple, tous les éléments détecteurs sont éclairés moins un, sauf si l'on est à cheval sur deux éléments détecteurs et la détection se fait donc par les n-1 ou n-2 éléments détecteurs sensibilisés. La localisation s'effectue par repérage du ou des deux détecteurs non éclairés. Le dispositif peut être utilisé dans n'importe quelle bande spectrale et aussi bien en continu qu'en impulsionnel. L'absence d'optique de focalisation permet d'avoir simultanément un champ élevé et une grande pupille, cette dernière étant liée seulement à la dimension du détecteur 5. Dans le cas de la détection d'alerte laser à 1,06 microns par exemple, il est possible de trouver des détecteurs linéaires 5 standards au silicium de 32 éléments ou plus, conduisant à une précision de localisation de quelques degrés RMS (ROOT MEAN SQUARED).

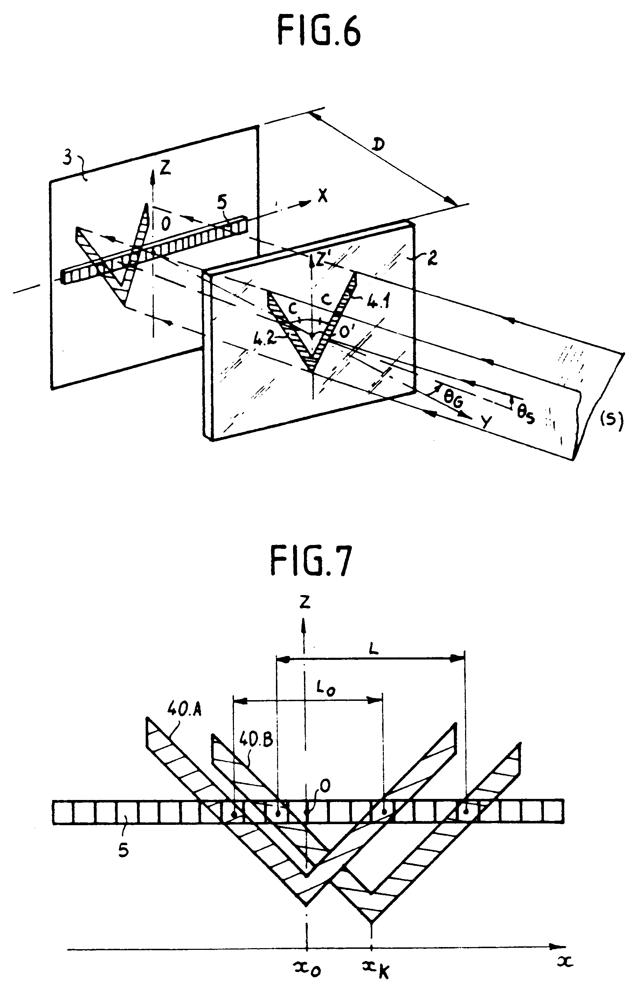

L'écartométrie à une dimension produite avec le capteur de base selon la figure 1 peut être complétée pour avoir une écartométrie à deux dimensions et donc une localisation directionnelle selon le principe de montage schématisé sur la figure 5 regroupant deux capteurs élémentaires 10A et 10B pour fournir respectivement la déviation angulaire $\theta$S en site et $\theta$G en gisement d'une source éloignée ponctuelle S. Chaque zone opaque linéaire 4A et 4B détermine avec la source S un plan P1 et P2 qui coupe la barrette correspondante 5A et 5B.

Si l'on tient compte des données connues de positionnement relatif des capteurs 10A et 10B, le calculateur 12 pourra calculer la direction de la droite d'intersection des plans P1 et P2 passant par S. Avec un troisième capteur 10C on peut de même, avec le couple 10A et 10C, ou avec le couple 10B et 10C, déterminer une deuxième direction, voire une troisième direction passant par le point S et donc localiser cette source. Cette technique est connue par le brevet français FR-A-2.399.033 et n'est pas reprise dans le détail.

La figure 6 représente un autre mode de réalisation suivant lequel le hublot 2 comporte deux fentes linéaires 4.1 et 4.2 formant un V disposé symétriquement par rapport à la direction Z. Dans le plan détecteur 3 on retrouve la barrette 5. Les deux branches du V avec la source S permettent de définir deux plans sécants suivant la droite passant par la pointe du V.

La figure 7 représente l'ombre portée 40.A dans le cas d'un dépointage nul en gisement et 40.B dans le cas d'un dépointage non nul. La pointe du V est d'abscisse Xo pour un dépointage nul et d'abscisse $X_K$ pour un dépointage non nul. La valeur de dépointage est donnée par la relation L = Lo + 2 tg C.D tg $\theta$S. Le paramètre L représente la distance entre les éléments non éclairés dans la position 40.B. Le paramètre Lo représente la distance entre les éléments non éclairés dans la position de référence 40.A. L'angle C est le demi-angle entre les branches du V. $\theta$S est l'angle de déviation en site. Cette première relation permet de déterminer la déviation $\theta$S en site de la source S par rapport à l'axe Y de référence.

Le milieu du segment d'amplitude L suit la relation X = Xo + D.tg $\theta$G comme on l'a vu précédemment dans le cas de la figure 1. Ce dispositif permet la localisation à deux dimensions avec une barrette unique. Le détecteur 5 peut être d'un type standard utilisable dans plusieurs bandes spectrales simultanément. Le circuit de traitement est agencé pour détecter les deux zones d'ombre à l'intersection du V projeté avec la barrette 5. Le décompte du nombre d'éléments entre ces zones par le rang des éléments non illuminés permet d'obtenir le paramètre L.

On peut ainsi que précédemment regrouper plusieurs capteurs élémentaires suivant la figure 6 pour obtenir la localisation spatiale de la source S, ou pour accroître le champ de surveillance en gisement.

Dans le cas d'un détecteur d'alerte laser la localisation en gisement est suffisante et la version préférée de réalisation est celle de la figure 1 qui est la plus simple et la plus économique. On notera que l'obtention d'un grand champ se traduit par une distance D faible entre le hublot 3 et le détecteur 5 et donc une réalisation compacte du dispositif.

**Revendications**

1. Dispositif optoélectrique de détection et de localisation d'une source rayonnante, comportant au moins un capteur élémentaire avec un réseau linéaire d'éléments photodétecteurs et, dans un plan parallèle au réseau, un cache optique, ce dernier comportant au moins une zone étroite délimitée de forme linéaire pour définir avec la source un plan sécant au réseau associé, un circuit de traitement des signaux détectés comportant, sur une première voie, un circuit de localisation de rang pour identifier le rang des éléments du réseau contenus dans le plan, et un circuit de calcul pour calculer, à partir des informations de rang, un paramètre de localisation angulaire de la direction de la source, le dispositif étant caractérisé en ce que le cache (2) est totalement transparent en dehors desdites zones linéaires (4, 4.1 et 4.2) qui sont opaques et en ce que le circuit de traitement (7) comporte, sur une deuxième voie, un sommateur (13) des signaux détectés couplé à un comparateur à seuil (14) pour valider la détection de la source rayonnante par transmission d'un signal de validation aux circuits de localisation (11) et de calcul (12).

2. Dispositif selon la revendication 1, caractérisé en ce qu'il comporte une seule zone linéaire (4) opaque de direction perpendiculaire à barrette (5).

3. Dispositif selon la revendication 1, caractérisé en ce qu'il comporte deux capteurs élémentaires un premier capteur (10A) pour déterminer la localisation angulaire en site $\theta$S d'une source (S) et un deuxième capteur (10B) pour déterminer la localisation en gisement ($\theta$G) de la source.

4. Dispositif selon la revendication 1, caractérisé en ce qu'il comporte deux zones linéaires (4.1 et 4.2) opaques formant un V incliné symétriquement par rapport à la direction du réseau linéaire (5) de manière à produire deux plans sécants et obtenir la localisation directionnelle de la source en gisement et en site.

5. Utilisation du dispositif selon l'une des revendications précédentes pour la détection et la localisation d'illuminateurs laser.

## Claims

1. An optoelectrical device for the detection and location of a radiating source, comprising at least one elementary pickup with a linear system of photodetector elements and, in a plane parallel to the system, an optical mask, the latter comprising at least one narrow delimited zone of linear shape to define with the source a plane intersecting the associated system, a circuit for processing the signals detected comprising, on a first path, an order locating circuit to identify the order of the elements of the network contained in the plane, and a calculation circuit to calculate, from the order data, a parameter of angular location of the direction of the source, the device being characterised in that the mask (2) is totally transparent outside said linear zones (4, 4.1 and 4.2) which are opaque and in that the processing circuit (7) comprises, on a second path, a summation arrangement (13) for the detected signals, coupled to a threshold comparator (14) to validate the detection of the radiating source by transmission of a validation signal to the location circuit (11) and calculation circuit (12).

2. A device according to Claim 1, characterised in that it comprises a single linear zone (4) which is opaque in a direction perpendicular to bar (5).

3. A device according to Claim 1, characterised in that it comprises two elementary pickups: a first pickup (10A) to determine the angular sight location $\theta$S of a source (S) and a second pickup (10B) to determine the bearing location ($\theta$G) of the source.

4. A device according to Claim 1, characterised in that it comprises two opaque linear zones (4.1 and 4.2) forming a V inclined symmetrically in relation to the direction of the linear system (5) so as to produce two intersecting planes and to obtain the directional sight and bearing location of the source.

5. The use of the device according to one of the preceding claims for the detection and location of laser illuminators.

## Patentansprüche

1. Opto-elektrische Vorrichtung zur Erfassung und Peilung einer strahlenden Quelle, mit mindestens einer Elementarsonde, die ein lineares Netz von Photodetektorelementen und in einer Ebene parallel zu diesem Netz eine optische Maske aufweist, wobei letztere mindestens eine schmal begrenzte geradlinige Zone besitzt, um mit der Quelle eine das zugehörige Netz schneidende Ebene zu bilden, mit einem Signal-Verarbeitungskreis für die erfaßten Signale, der auf einem ersten Kanal einen Rangermittlungskreis zur Identifizierung des Rangs der in der Ebene liegenden Elemente des Netzes und einen Rechenkreis zur Berechnung eines den Winkel der Richtung der Quelle definierenden Peilparameters ausgehend von den Ranginformationen enthält, dadurch gekennzeichnet, daß die Maske (2) mit Ausnahme der lichtundurchlässigen geradlinigen Zonen (4, 4.1 und 4.2) völlig lichtdurchlässig ist und daß der Signal-Verarbeitungskreis (7) auf einem zweiten Kanal ein Summierglied (13) für die erfaßten Signale enthält, das an einen Schwellwertkomparator (14) gekoppelt ist, um die Erfassung der strahlenden Quelle durch Übertragung eines Bestätigungssignals an die Peil- und Rechenkreise (11, 12) zu bestätigen.

2. Vorrichtung nach Anspruch 1, dadurch gekennzeichnet, daß sie eine einzige geradlinige lichtundurchlässige Zone (4) aufweist, deren Richtung senkrecht zu der der Leiste (5) verläuft.

3. Vorrichtung nach Anspruch 1, dadurch gekennzeichnet, daß sie zwei Elementarsonden aufweist, nämlich eine erste Sonde (10A) zur Bestimmung der Winkelpeilung einer Quelle (S) in Elevationsrichtung und eine zweite Sonde (10B) zur Bestimmung der Winkelpeilung der Quelle in horizontaler Richtung (ΘG).

4. Vorrichtung nach Anspruch 1, dadurch gekennzeichnet, daß sie zwei geradlinige lichtundurchlässige und ein V bildende Zonen (4.1 und 4.2) enthält, die symmetrisch bezüglich der Richtung des geradlinigen Netzes (5) angeordnet sind, so daß sich zwei einander schneidende Ebenen ergeben und die Richtungspeilung der Quelle in horizontaler und Elevationsrichtung möglich wird.

5. Verwendung einer Vorrichtung nach einem der vorhergehenden Ansprüche für die Erfassung und Peilung von Peillasern.

# FIG.1

# FIG.2

FIG.3

FIG.4

FIG.5

# FIG.6

# FIG.7